# EUROPÄISCHE PATENTANMELDUNG

(11) **EP 0 723 903 A1**
(43) Veröffentlichungstag der Anmeldung: **31.07.1996**
(21) Anmeldenummer: 96100439.7
(22) Anmeldetag: 13.01.1996
(51) Int. Cl.: B62D 25/06, B62D 65/00

(54) **Fahrzeugdach mit wenigstens einer öffnungsfähigen Dachplatte und Verfahren zur Herstellung desselben**

(30) Priorität: 24.01.1995 DE 19502019
(71) Anmelder: WEBASTO KAROSSERIESYSTEME GmbH, D-82131 Stockdorf (DE)
(72) Erfinder: Hirschvogel, Engelbert, D-86928 Hofstetten (DE); Hofmann, Werner, D-82152 Planegg (DE); Kauschke, Hans-Jörg, D-82041 Deisenhofen (DE); Mayer, Johann, D-85238 Petershausen (DE); Ulbrich, Thomas, D-86916 Kaufering (DE); Wikelski, Thomas, D-82266 Schlagenhofen (DE); Schiffmann, Manfred, D-86504 Merching (DE)
(74) Vertreter: Wiese, Gerhard

(57) **Zusammenfassung**

Die Erfindung betrifft ein Fahrzeugdach (1) mit wenigstens einer öffnungsfähigen Dachplatte (2, 7), welches als Modul mit einer Rohkarosserie des Fahrzeugs verbindbar ist. Sie betrifft ferner ein Verfahren zur Herstellung eines solchen Fahrzeugdaches. Erfindungsgemäß ist vorgesehen, daß das Modul als Komponenten zwei je einen Längsholm (12) und eine B-Säule (11) umfassende Seitenteile (B) und ferner eine die Dachplatte (2, 7), deren Mechanik (3, 8) sowie zwei längsverlaufende Führungsschienen (6) umfassende Funktionseinheit (A) aufweist, welche untereinander mittels einer lösbaren Verbindung (Schrauben 20) verbindbar sind. Ein erfindungsgemäßes Fahrzeugdach kann bei einem Fahrzeugzulieferer komplett vormontiert und geprüft, in zerlegtem Zustand zu einem Fahrzeughersteller angeliefert und dort kostengünstig am Band montiert werden.

## Beschreibung

Die Erfindung betrifft ein Fahrzeugdach mit wenigstens einer öffnungsfähigen Dachplatte, welches als Modul mit einer Rohkarosserie des Fahrzeuges verbindbar ist und ein Verfahren zur Herstellung eines solchen Fahrzeugdaches.

Aus der DE 35 45 871 A1 ist ein Fahrzeugdach bekannt, das mit einer öffnungsfähigen Dachplatte ausgestattet ist, und das mit seitlichen Dachholmen der Rohkarosserie verbunden werden kann. Der Lieferumfang eines derartigen Dachmoduls ist auf eine im wesentlichen horizontale Dachplatte beschränkt. Die Bestrebungen der Fahrzeughersteller nach einer Verringerung ihrer eigenen Fertigungstiefe erfordern neue Konzepte, gemäß denen umfangreichere Dachmodule in komplett vorgeprüftem Zustand bei einem Fahrzeugzulieferer erstellt, kostengünstig transportiert und beim Fahrzeughersteller am Band in einfacher Weise zusammengesetzt werden können.

Zur Lösung dieser Anforderungen wird gemäß der Erfindung ein Fahrzeugdach mit den Merkmalen des Patentanspruchs 1 und ein Verfahren mit den Merkmalen des Patentanspruchs 9 vorgeschlagen. Vorteilhafte Ausgestaltungen der Erfindung sind den Unteransprüchen zu entnehmen.

Dadurch, daß das Modul als Komponenten zwei je einen Längsholm und eine B-Säule umfassende Seitenteile und eine die Dachplatte, deren Mechanik sowie zwei längsverlaufende Führungsschienen umfassende Funktionseinheit aufweist, welche untereinander mittels einer lösbaren Verbindung verbindbar sind, kann ein komplettes Fahrzeugdach samt Seitenteilen bei einem Zulieferer gefertigt, komplett vorgeprüft, kostengünstig in zerlegtem Zustand transportiert und beim Fahrzeughersteller am Band einfach und schnell zusammengefügt und mit der im hinteren Bereich an der Gürtellinie endenden Rohkarosserie verbunden werden. Dieses neuartige Konzept ermöglicht die Verlagerung eines größeren Lieferumfanges an einen Fahrzeugzulieferer als Systemlieferant, wobei die Transportkosten aufgrund der lösbaren Verbindung der Komponenten niedrig gehalten werden können. Die lösbare Verbindung zwischen den Komponenten des Moduls wird vorzugsweise durch Schrauben gebildet.

Zur Erhöhung der Stabilität der Seitenteile ist es vorteilhaft, wenn diese eine die B-Säule mit dem Längsholm verbindende Verstrebung umfassen. Hierduch wird ferner die Voraussetzung dafür geschaffen, daß an den Seitenteilen zwischen B-Säule, hinterem Teil des Längsholms und der Verstrebung zusätzlich eine Fondseitenscheibe angeordnet ist.

Vorteilhaft ist es ferner, wenn die Funktionseinheit zusätzlich eine zwischen den Führungsschienen angeordnete, beispielsweise durch Kleben oder ähnliches an diesen befestigte Heckscheibe umfaßt.

Zur Vergrößerung der effektiven Lüftungsöffnung des Dachmoduls ist es vorteilhaft, daß die Funktionseinheit zusätzlich zur öffnungsfähigen Dachplatte eine ausstellbare Windabweislamelle umfaßt. Diese kann zum einen in ausgestelltem Zustand bei geschlossener Dachplatte einen kleinen Lüftungsquerschnitt bereitstellen und zum anderen bei geöffneter Dachplatte den Fahrtwind zur Vermeidung von Zuglufterscheinungen um die freigegebene Dachöffnung herumlenken.

Zur Verminderung des Montageaufwands beim Fahrzeughersteller ist es ferner vorteilhaft, wenn die Funktionseinheit zusätzlich einen elektrischen Antrieb für die Mechanik der Dachplatte umfaßt. Für den gleichen Zweck ist es förderlich, wenn die Funktionseinheit zusätzlich einen Heckscheibenwischer mit dessen Antrieb umfaßt.

Ein Verfahren zur Herstellung eines Fahrzeugdaches ist durch die im Patentanspruch 10 angegebenen Verfahrensschritte gekennzeichnet. Besonders vorteilhaft ist es dabei, wenn die Verfahrensschritte a) und b) bei einem Zulieferer erfolgen, wenn die Funktionseinheit und die Seitenteile in unverbundenem Zustand transportiert und im Verfahrensschritt c) beim Fahrzeughersteller verbunden werden. Durch den Transport in unverbundenem Zustand lassen sich die Laderaumkapazitäten der für den Transport verwendeten Fahrzeuge wesentlich besser nutzen. Außerdem sind die einzelnen Komponenten des Dachmoduls beim Fahrzeughersteller bei der Montage am Band leichter handhabbar.

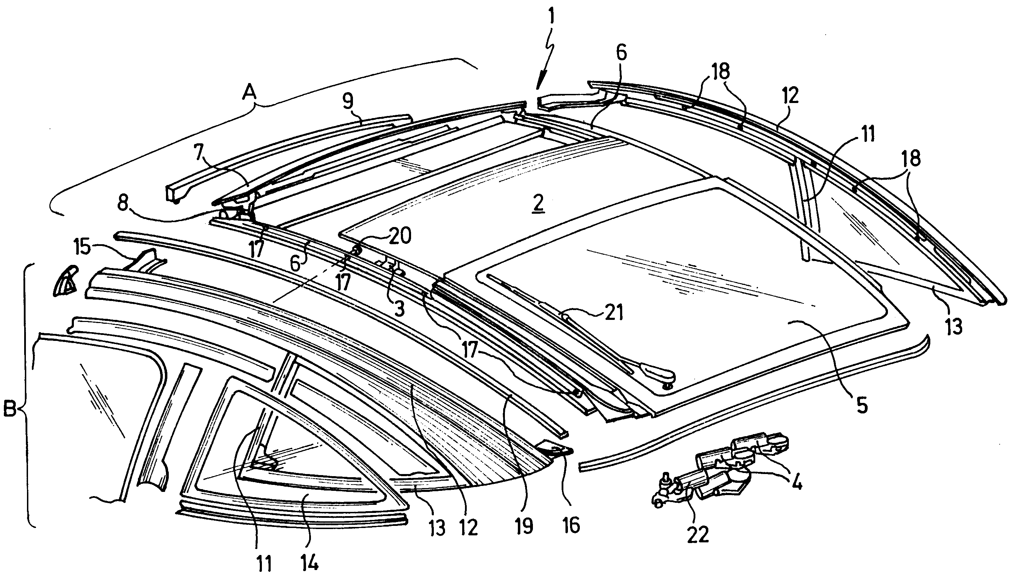

Nachfolgend ist ein Ausführungsbeispiel der Erfindung anhand der Zeichnung beschrieben. Die einzige Figur zeigt in einer schematischen perspektivischen Darstellung die Einzelteile der das Dachmodul bildenden Komponenten in unverbundenem Zustand.

Ein insgesamt mit 1 bezeichnetes modulares Fahrzeugdach setzt sich aus einer Funktionseinheit A und zwei Seitenteilen B zusammen. Die Funktionseinheit A umfaßt eine öffnungsfähige Dachplatte 2 aus transparentem Material, welche mittels einer Mechanik 3 beiderseits an parallel zueinander angeordneten Führungsschienen 6 absenkbar und verschiebbar angeordnet ist. Die Mechanik 3 der Dachplatte 2 ist über nicht dargestellte bekannte Antriebskabel mit einem elektrischen Antrieb 4 verbunden, der im hinteren Teil des Fahrzeudaches unterhalb einer Heckscheibe 5 angeordnet ist, welche beidseits mit den Führungsschienen 6 durch Kleben verbunden ist. Die Funktionseinheit A umfaßt ferner im vorderen Teil eine zwischen den Führungsschienen 6 schwenkbar und mit ihrer Hinterkante ausstellbar angeordnete Windabweislamelle 7. Deren Ausstellmechanik 8 ist ebenfalls über nicht dargestellte Antriebskabel mit dem Antrieb 4 verbunden. Die Ausstellmechanik 8 für die Windabweislamelle 7 ist mit der Mechanik 3 der Dachplatte 2 derart gekoppelt, daß das Ausstellen der Windabweislamelle 7 zeitlich vor einem Absenken und nach hinten Verfahren der Dachplatte 2 erfolgt und somit auch separat ansteuerbar ist. Eine Wasserrinne 9 untergreift die Vorderkante der Windabweislamelle 7 und dichtet das Dachmodul gegenüber dem Fahrzeug ab. Die Wasserrinne 9 dient dem Auffangen von vor der Windabweislamelle 7 eindringendem Regenwasser und leitet dieses seitlich in Wasserablaufrohre ein, die in der nicht dargestellten A-Säule verlegt sind.

Die Seitenteile B werden jeweils von einer B-Säule 11 und einem mit dieser verbundenen Längsholm 12 gebildet. Der Längsholm 12 weist eine an die gebogene Form der Führungsschiene 6 angepaßte Kontur auf. Die B-Säule 11 ist im unteren Bereich durch eine im wesentlichen horizontal verlaufende Verstrebung 13 mit dem hinteren Teil des Längsholmes 12 verbunden. Der sich hierdurch ergebende dreieckförmige Rahmen ist mittels einer aufgeklebten Fondseitenscheibe 14 verschlossen.

Zur Verbindung mit der nicht dargestellten Rohkarosserie weisen die Seitenteile im vorderen und im hinteren Bereich des Längsholmes 12 nach innen abgewinkelte Flanschteile 15 bzw. 16 auf. Die vorderen Flanschteile 15 dienen zur Verbindung mit einem nicht dargestellten vorderen Querholm, der zwei seitlich einer Frontscheibe hochgezogene A-Säulen miteinander verbindet. Die hinteren Flanschteile 16 dienen zur Verbindung mittels Schrauben und/oder Kleben im Bereich der Gürtellinie der Rohkarosserie im hinteren Teil des Fahrzeuges.

Die Funktionseinheit A ist mit den beiden Seitenteilen B ebenfalls lösbar verbunden. Hierzu weisen die Führungsschienen 6 voneinander beabstandet mehrere Bohrungen 17 auf, welche beim Zusammenfügen mit den Seitenteilen B deckungsgleich zu Schraublöchern 18 liegen, welche in den Längsholmen 12 angeordnet sind. Von den die Führungsschienen 6 mit den Längsholmen 12 verbindenden Schrauben 20 ist zur Vereinfachung der Zeichnung nur eine angedeutet.

Die Funktionseinheit A weist zusätzlich einen im Bereich der Heckscheibe 5 angeordneten Heckscheibenwischer 21 auf, dessen Antrieb 22 ebenfalls unterhalb der Heckscheibe 5 montiert und mit der Funktionseinheit A verbunden ist.

Beim Fahrzeugzulieferer werden die Funktionseinheit A und beide Seitenteile komplett montiert und vorgeprüft. Aufgrund der lösbaren Befestigung zueinander und zur Rohkarosserie können sie auch bereits in der Wagenfarbe lackiert werden. Die Funktionseinheit A wird sodann getrennt von den beiden Seitenteilen B zum Fahrzeughersteller angeliefert, dort am Band zusammengefügt und mittels der Schrauben 20 zu einem Dachmodul verschraubt. Dichtungsstreifen 19 dienen zur Abdeckung der Verbindungsstellen zwischen den Führungsschienen 6 und den Längsholmen 12. Das komplette Dachmodul aus Funktionseinheit A und beiden Seitenteilen B wird anschließend mit der Rohkarosserie des Fahrzeuges durch Verschrauben und/oder Kleben im Bereich der Flanschteile 15 und 16 verbunden.

Durch das erfindungsgemäße, aus mehreren Komponenten lösbar zusammengefügte Dachmodul läßt sich die Fertigungstiefe beim Fahrzeughersteller bedeutsam verringern. Der Lieferumfang eines Fahrzeugzulieferers als Systemlieferant wird entsprechend erhöht. Aufgrund des Transportes in zerlegtem Zustand können die Dachmodulen kostengünstig zum Fahrzeughersteller transportiert und dort am Band ebenso kostengünstig in kürzester Zeit mit einer Rohkarosserie verbunden werden.

### Bezugszeichenliste

- 1: Fahrzeugdach
- 2: Dachplatte
- 3: Mechanik
- 4: Antrieb (für 3)
- 5: Heckscheibe
- 6: Führungsschiene
- 7: Windabweislamelle
- 8: Ausstellmechanik
- 9: Wasserrinne
- 11: B-Säule
- 12: Längsholm
- 13: Verstrebung
- 14: Fondseitenscheibe
- 15: Flanschteil (vorn)
- 16: Flanschteil (hinten)
- 17: Bohrungen
- 18: Schraublöcher
- 19: Dichtungsstreifen
- 20: Schrauben
- 21: Heckscheibenwischer
- 22: Antrieb (für 21)
- A: Funktionseinheit
- B: Seitenteil

## Patentansprüche

1. Fahrzeugdach mit wenigstens einer öffnungsfähigen Dachplatte (2), welches als Modul mit einer Rohkarosserie des Fahrzeuges verbindbar ist, **dadurch gekennzeichnet**, daß das Modul als Komponenten zwei je einen Längsholm (12) und eine B-Säule (11) umfassende Seitenteile (B) und ferner eine die Dachplatte(n) (2, 7), deren Mechanik (3, 8) sowie zwei längsverlaufende Führungsschienen (6) umfassende Funktionseinheit (A) aufweist, welche Komponenten (A,B) untereinander mittels einer lösbaren Verbindung verbindbar sind.

2. Fahrzeugdach nach Anspruch 1, **dadurch gekennzeichnet**, daß die lösbare Verbindung durch Schrauben (20) gebildet wird.

3. Fahrzeugdach nach einem der vorhergehenden Ansprüche, **dadurch gekennzeichnet**, daß die Seitenteile (B) eine die B-Säule (11) mit dem Längsholm (12) verbindende Verstrebung (13) umfassen.

4. Fahrzeugdach nach Anspruch 3, **dadurch gekennzeichnet**, daß die Seitenteile (B) eine zwischen B-Säule (11), hinterem Teil des Längsholms (12) und der Verstrebung (13) angeordnete Fondseitenscheibe (14) aufweisen.

5. Fahrzeugdach nach einem der Ansprüche 1 und 2, **dadurch gekennzeichnet**, daß die Funktionseinheit (A) zusätzlich eine zwischen den Führungsschienen (6) angeordnete Heckscheibe (5) umfaßt.

6. Fahrzeugdach nach einem der Ansprüche 1 und 2, **dadurch gekennzeichnet**, daß die Funktionseinheit (A) als zusätzliche Dachplatte eine ausstellbare Windabweislamelle (7) umfaßt.

7. Fahrzeugdach nach Anspruch 1, **dadurch gekennzeichnet**, daß die Funktionseinheit (A) zusätzlich wenigstens einen elektrischen Antrieb (4) für die Mechanik (3, 8) der Dachplatte(n) (2, 7) umfaßt.

8. Fahrzeugdach nach Anspruch 1 und 5, **dadurch gekennzeichnet**, daß die Funktionseinheit (A) zusätzlich einen Heckscheibenwischer (21) und dessen Antrieb (22) umfaßt.

9. Verfahren zur Herstellung eines Fahrzeugdaches, **gekennzeichnet durch** folgende Verfahrensschritte:
a) Herstellung zweier je eine B-Säule (11) und einen Längsholm (12) umfassender Seitenteile (B).
b) Herstellung einer Funktionseinheit (A) bestehend aus zwei voneinander beabstandeten Führungsschienen (6) sowie wenigstens einer an diesen mittels einer Mechanik (3, 8) gelagerten öffnungsfähigen Dachplatte (2, 7).
c) Zusammenfügen der Funktionseinheit (A) und der beiden Seitenteile (B) zu einem Modul mittels einer lösbaren Verbindung.
d) Verbinden des Moduls mit der Rohkarosserie.

10. Verfahren nach Anspruch 9, **dadurch gekennzeichnet**, daß die Verfahrensschritte a) und b) bei einem Zulieferer erfolgen, daß die Funktionseinheit (A) und die Seitenteile (B) in unverbundenem Zustand transportiert und im Verfahrensschritt c) beim Fahrzeughersteller verbunden werden.
